# EUROPÄISCHE PATENTSCHRIFT

(11) **EP 1 178 248 B1**
(45) Veröffentlichungstag und Bekanntmachung des Hinweises auf die Patenterteilung: **13.09.2006**
(21) Anmeldenummer: 01117012.3
(22) Anmeldetag: 12.07.2001
(51) Int. Cl.: F16H 63/48, B60T 7/12

(54) **Elektronische Einheit zum automatischen Aktivieren einer Parksperre in Kraftfahrzeugen**
Control unit for automatic activation of a parking brake in a motor vehicle
Unité pour l'activation automatique d'un frein de stationnement dans un véhicule automobile

(30) Priorität: 02.08.2000 DE 10037576
(43) Veröffentlichungstag der Anmeldung: 06.02.2002
(73) Patentinhaber: Bayerische Motoren Werke Aktiengesellschaft, 80809 München (DE)
(72) Erfinder: Ehrmaier, Rudolf, 81927 München (DE); Sappler, Anton, 81369 München (DE); Schmerer, Reinhard, 85250 Pipinsried (DE)

(56) Entgegenhaltungen:
- DE-A- 19 629 426
- DE-A- 19 801 064
- DE-A- 19 820 920
- US-A- 4 561 527
- US-A- 4 572 319
- PATENT ABSTRACTS OF JAPAN Bd. 1998, Nr. 09, 31. Juli 1998 (1998-07-31) & JP 10 095319 A (FUJITSU TEN LTD), 14. April 1998 (1998-04-14)

## Beschreibung

Die Erfindung betrifft eine elektronische Einheit bzw. ein Verfahren zum automatischen Aktivieren einer Parksperre in Kraftfahrzeugen

Die US 4,561,527 offenbart eine elektronische Einheit zum automatischen Aktivieren einer Parksperre abhängig von mindestens einem vorgegebenen Betriebsparameter oder Betriebszustand in einem Kraftfahrzeug, wobei die Einheit Mittel aufweist, durch die eine willkürliche Verhinderung der automatischen Aktivierung der Parksperre auslösbar ist. Weiterhin wird zum technischen Hintergrund auf die US 4,572,319 hingewiesen, die eine Einheit offenbart, bei der die Parksperre beim Abstellen der Brennkraftmaschine automatisch aktiviert wird.

Aus der DE 196 25 019 A1 ist beispielsweise eine elektronische Einheit in Form eines Getriebesteuergeräts bekannt, das zu anderen Fahrzeugfunktionen hinzu zum automatischen Aktivieren einer Parksperre verwendet wird. Die Parksperre wird abhängig von mindestens einem vorgegebenen Betriebszustand eines Kraftfahrzeugs, das mit einem mechanischen Zündschlüssel in Betrieb genommen wird, automatisch aktiviert. Ein derartiger Betriebszustand ist beispielsweise das Unterschreiten einer bestimmten Fahrzeuggeschwindigkeitsschwelle, die Stellung des Zündschlüssels im Zündschloss und/oder der Zustand der Fahrzeugtür (geöffnet/geschlossen). Spätestens aber nach dem Abziehen des Zündschlüssels aus dem Zündschloss wird die Parksperre aktiviert.

Vermehrt werden in Zukunft zur Inbetriebnahme von Kraftfahrzeugen schlüssellose Zugangs- bzw. Fahrberechtigungssysteme eingesetzt. Ein derartiges System ist beispielsweise die aus der DE 198 01 064 A1 und der DE 198 23 707 A1 bekannte elektronische Berechtigungsnachweiseinrichtung. Hierbei findet eine drahtlose Code-Übertragung zur Feststellung der Zugangs- und Fahrberechtigung statt. Ein mechanischer Zündschlüssel wird lediglich noch als Redundanz vorgesehen. Das Fahrzeug wird mit einem Drehschalter bei gleichzeitiger Überprüfung der Berechtigung mittels der Berechtigungsnachweiseinrichtung gestartet und ausgeschaltet. Nach einem Ausschalten ist also kein Abziehen eines mechanischen Schlüssels erforderlich.

Dennoch wird grundsätzlich das automatische Aktivieren einer Parksperre bei abgezogenem Schlüssel, wobei eine elektronische Berechtigungsnachweiseinrichtung einem konventionellen Schlüsselsystem funktionell gleichzusetzen ist, in einigen Ländern gesetzlich gefordert. Aus Sicherheitsgründen wird daher bei Fahrzeugen ohne mechanischem Schlüssel die Parksperre unabhängig von einer Schlüsselstellung abhängig von mindestens einem anderen Betriebsparameter bzw. Betriebszustand automatisch aktiviert. Hierbei werden insbesondere Betriebsparameter bzw. Signale ausgewertet, die auf ein Verlassen des Fahrzeuges hinweisen, wie z. B. eine offene Fahrertür (abfragbar über einen Schalter in der Tür) oder ein leerer Fahrersitz (erkennbar über Sitzbelegungssensoren).

Es ist Aufgabe der Erfindung, einen optimalen Betriebszustand zu definieren, bei dem die Parksperre automatisch aktiviert wird.

Diese Aufgabe wird durch die Merkmale des unabhängigen Patentanspruch 1 gelöst.

Die Erfindung betrifft Fahrzeuge mit elektronischem Zugangs- und Fahrberechtigungssystem, bei dem kein mechanischer Schlüssel mehr vorhanden ist und bei dem somit ein Schlüssel auch nicht mehr abgezogen werden kann. Derartige Zugangs- und Fahrberechtigungssysteme sind beispielsweise mit dem Fahrer mitgeführte Code-Karten, die mit einem im Fahrzeug verbauten Berechtigungsüberprüfgerät drahtlos (z. B. per Funk) kommunizieren. Grundsätzlich soll dabei die Parksperre, vorzugsweise in Form des Einlegens der Parkposition bei Vorhandensein eines Automatikgetriebes oder aber auch in Form des Einlegens einer Feststellbremse, automatisch beim Abstellen der Brennkraftmaschine aktiviert werden. Die Auswahl dieses Betriebszustandes als Kriterium zum automatischen Einlegen der Parksperre hat sich sowohl als komfortabel als auch als sicher gezeigt. Denn eine abgestellte Brennkraftmaschine weist grundsätzlich daraufhin, dass das Fahrzeug nicht mehr bewegt werden soll. Zum anderen ist jedoch bei einem Irrtum die Deaktivierung der Parksperre durch einen erneuten Start der Brennkraftmaschine schnell wieder erreicht.

Soll beispielsweise ausnahmsweise bei Vorliegen dieser Betriebsparameter bzw. Betriebszustände keine Parksperre eingelegt werden, muss der Fahrer dies zuvor bewusst durch eine aktive Handlung signalisieren. Hierzu sind direkt oder indirekt manuell zu betätigende Mittel vorgesehen, die mit der elektronischen Einheit zur automatischen Aktivierung der Parksperre zusammenwirken. Diese Mittel haben vorzugsweise eine Funktion zur Folge, die mit dem Steckenlassen eines mechanischen Zündschlüssels vergleichbar sind.

Gemäß einer ersten Möglichkeit ist hierfür zur willkürlichen Verhinderung der automatischen Aktivierung der Parksperre ein direkt manuell zu betätigender Taster in Form eines AUS-Tasters mit der elektronischen Einheit verbunden. Der Fahrer betätigt den AUS-Taster, wodurch beispielsweise das elektronische Zugangs-/Fahrberechtigungssystem ausgeschaltet wird. D. h. beispielsweise, dass eine Berechtigungsnachweiseinrichtung (z. B. drahtlos kommunizierende Code-Karte) deaktiviert wird. Somit ist auch ein Verriegeln des Fahrzeuges nicht mehr möglich. Die Funktion dieses elektronischen Zugangs- bzw. Fahrberechtigungssystems wird beispielsweise einem fahrzeugfesten Speicher (ähnlich dem aus der DE 198 23 707 A1 bekannten zusätzlichen in einem Schacht verriegelten Speicher), der im Fahrzeug verbleibt, zugeteilt. Die Funktion des elektronischen "Schlüssels" verbleibt also im Fahrzeug. Dies entspricht dem Steckenlassen eines Zündschlüssel, wodurch der Fahrer naturgemäß besonders aufmerksam bleiben wird. Der Fahrer erhält vorzugsweise eine Mitteilung, dass die Parksperre nun nicht eingelegt wird und dass das Fahrzeug mit dem elektronischen "Schlüssel" nicht verriegelt werden kann. Weiter kann beispielsweise in dieser Situation das Entfernen des fahrzeugfesten Speichers zum automatischen Aktivieren der Parksperre und zum Verriegeln des Fahrzeugs führen. Ein derartiger AUS-Taster (bzw. AUS-Schalter) kann beispielsweise frei zugänglich in der Instrumententafel, in der Mittelkonsole, am Dachhimmel oder auf dem fahrzeugfesten Speicher vorgesehen und mit einem entsprechenden Symbol versehen werden. Durch eine erneute Betätigung des AUS-Tasters kann die beschriebene Funktion zur Verhinderung der Aktivierung der Parksperre rückgängig gemacht werden. Ein Rückgängigmachen der beschriebenen Funktion kann jedoch auch durch eine vorgegebene Logik, z. B. durch Abfrage der Türkontakte und der Sitzbelegung oder bei Motorstart, automatisch ausgeführt werden.

Gemäß einer zweiten Möglichkeit, bei der das Kraftfahrzeug mittels einer elektronischen Berechtigungsnachweiseinrichtung mit drahtloser Code-Übertragung in Betrieb genommen werden kann, ist die willkürliche Verhinderung der automatischen Aktivierung der Parksperre durch ein Einstecken der Berechtigungsnachweiseinrichtung in einen dafür vorgesehenen Aufnahmeschacht auslösbar. Beispielsweise wird beim Einstecken der Berechtigungsnachweiseinrichtung in den Aufnahmeschacht ein Schalter indirekt manuell betätigt. Eine derartige Berechtigungsnachweiseinrichtung ist beispielsweise eine Code-Karte. Beispielsweise kann ein ohnehin bereits für ein anderes Modul vorgesehener Aufnahmeschacht verwendet werden. Bei einer Berechtigungsnachweiseinrichtung nach der DE 198 23 707 A1 kann die Berechtigungsnachweiseinrichtung, z. B. in Form einer Code-Karte, in den Schacht der Einrichtung zur Aufnahme eines zusätzlichen Speichers nach dessen vorheriger Entnahme eingesteckt werden. Ein derartiger elektronischer "Schlüssel", z. B. in Form einer Code-Karte, eines Transponders oder eines anderen Speichers, muss demnach an einer dafür vorgesehenen Position im Fahrzeug hinterlassen werden. Diese Funktion entspricht ebenfalls dem Steckenlassen eines Zündschlüssel.

Durch diese Erfindung kann ein elektronisches Zugangs- und Fahrberechtigungssystem mit den Anforderungen an die unter dem Begriff Key-Interlock bekannte Funktion komfortabel kombiniert werden.

## Patentansprüche

1. Elektronische Einheit zum automatischen Aktivieren einer Parksperre abhängig von mindestens einem vorgegebenen Betriebsparameter oder Betriebszustand in einem Kraftfahrzeug, das durch eine elektronische Berechtigungsnachweiseinrichtung mit drahtloser Code-Übertragung in Betrieb genommen werden kann, wobei der Betriebszustand zum grundsätzlichen automatischen Aktivieren der Parksperre das Abstellen der Brennkraftmaschine ist, wobei die Einheit Mittel aufweist, durch die eine willkürliche Verhinderung der automatischen Aktivierung der Parksperre auslösbar ist, und wobei die Einheit Mittel aufweist, durch die die willkürliche Verhinderung der automatischen Aktivierung der Parksperre durch ein Einstecken der Berechtigungsnachweiseinrichtung in einen dafür vorgesehenen Aufnahmeschacht auslösbar ist.

2. Elektronische Einheit nach Patentanspruch 1, wobei die Einheit zur willkürlichen Verhinderung der automatischen Aktivierung der Parksperre mit einem direkt manuell zu betätigenden Taster in Form eines AUS-Tasters verbunden ist.

## Claims

1. An electronic unit for automatically activating a parking lock depending on at least one specified operating parameter or operating state in a motor vehicle, which can be started by an electronic authorisation verification device with wireless code transmission, wherein the operating state for the basic automatic activation of the parking lock is the turning off of the internal-combustion engine, wherein the unit has means through which discretionary prevention of the automatic activation of the parking lock can be triggered, and wherein the unit has means, through which discretionary prevention of the automatic activation of the parking lock can be triggered by inserting the authorisation verification device into a holder provided for this.

2. An electronic unit according to claim 1, wherein the unit for discretionary prevention of the automatic activation of the parking lock is connected to a key button to be actuated directly manually, in the form of an OFF key button.

## Revendications

1. Unité électronique pour l'activation automatique d'un frein de stationnement, en fonction d'au moins un paramètre de fonctionnement ou état de fonctionnement prédéfini dans un véhicule qui peut être mis en service au moyen d'un dispositif d'autorisation électronique avec transmission de code sans fil,
l'état de fonctionnement pour l'activation automatique de principe du frein de stationnement étant représenté par l'arrêt du moteur à combustion interne,
l'unité comportant des moyens par lesquels un empêchement arbitraire de l'activation automatique du frein de stationnement peut être levée et dans laquelle des moyens permettent de lever l'empêchement arbitraire de l'activation automatique du frein de stationnement en introduisant le dispositif d'autorisation dans un puits de réception prévu à cet effet.

2. Unité électronique selon la revendication 1,
l'unité étant reliée, en vue de l'empêchement arbitraire de l'activation automatique du frein de stationnement, à une touche pouvant être actionnée manuellement de manière directe et ayant la forme d'une touche ARRET.
